(19) Europäisches Patentamt
European Patent Office
Office européen des brevets

(11) **EP 3 885 827 A1**

(12) **DEMANDE DE BREVET EUROPEEN**

(43) Date de publication:
**29.09.2021 Bulletin 2021/39**

(21) Numéro de dépôt: **21158983.3**

(22) Date de dépôt: **24.02.2021**

(51) Int Cl.:
*G02F 1/39* (2006.01)          *G02B 6/14* (2006.01)
*H01S 3/067* (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **23.03.2020 FR 2002799**

(71) Demandeurs:
• **Compagnie Industrielle des Lasers Cilas**
  **45100 Orléans (FR)**
• **Université de Limoges**
  **87032 Limoges (FR)**
• **Centre National de la Recherche Scientifique - CNRS**
  **75794 Paris Cedex 16 (FR)**

(72) Inventeurs:
• **MILLOT, Guy**
  **21220 Chevannes (FR)**
• **COUDERC, Vincent**
  **87430 Verneuil sur Vienne (FR)**
• **KRUPA, Katarzyna**
  **2005-070 Sulejówek (PL)**
• **TONELLO, Alessandro**
  **87000 Limoges (FR)**
• **WABNITZ, Stefan**
  **00152 Rome (IT)**
• **MONTAGNE, Jean-Eucher**
  **45000 Orléans (FR)**

(74) Mandataire: **Gevers & Orès**
**Immeuble le Palatin 2**
**3 Cours du Triangle**
**CS 80165**
**92939 Paris La Défense Cedex (FR)**

(54) **GUIDE D'ONDE MULTIMODE CONFIGURÉ POUR GÉNÉRER UNE RADIATION MONOMODE À PARTIR D'UNE RADIATION MONOMODE**

(57) - Guide d'onde multimode configuré pour générer une radiation monomode à partir d'une radiation monomode.
- Le guide d'onde (1) présente un profil d'indice comprenant au moins un maximum, le ou les maxima du profil d'indice correspondant respectivement à au moins un maximum d'intensité de la radiation de sortie (11) à un mode d'ordre souhaité, le guide d'onde (1) présentant également au moins un ion dopant configuré pour absorber la radiation de pompe (31), le ou les ions dopants présentant un profil de concentration d'ions dopants comprenant au moins un maximum.

**EP 3 885 827 A1**

Fig. 1

## Description

DOMAINE TECHNIQUE

La présente invention concerne le domaine des guides d'onde. En particulier, il concerne les guides d'onde multimodes, tels que des fibres optiques multimodes.

ÉTAT DE LA TECHNIQUE

Les guides d'onde multimodes ne sont généralement pas utilisés pour les amplificateurs lasers. En effet, les guides d'onde multimodes permettent de propager simultanément plusieurs modes transverses d'une radiation. Ainsi, une radiation sensiblement monomode en entrée d'un guide d'onde multimode et se propageant dans le guide d'onde devient en sortie une radiation multimode plus divergente qu'une radiation monomode. Cela limite donc l'utilisation d'un guide d'onde multimode dans de nombreuses applications telles que l'imagerie biologique, les LIDAR (« Light Détection And Ranging » en anglais pour « détection et estimation de la distance par la lumière »), la désignation laser, la spectroscopie, la microspectroscopie, etc. L'utilisation d'un guide d'onde monomode paraît être une bonne solution afin de minimiser le nombre de modes en sortie du guide d'onde. Toutefois, ce type de guide d'onde est limité quant à la puissance de la radiation laser pouvant s'y propager. Un guide d'onde multimode permet une propagation de radiations lasers présentant une puissance plus importante que la puissance possible dans un guide d'onde monomode. Par ailleurs, la largeur d'une fibre multimode est, en général, plus grande que la largeur d'une fibre monomode. Cette largeur plus importante permet de repousser l'apparition d'effets non linéaires parasites importants, ce qui préserve la qualité spectrale de la radiation laser. La propagation des radiations lasers sur un nombre réduit de modes dans les guides d'onde multimodes revêt donc un intérêt important pour garantir une radiation laser avec de bonnes qualités spatiales et spectrales en sortie du guide d'onde.

EXPOSÉ DE L'INVENTION

La présente invention a pour objet de pallier les inconvénients d'une fibre multimode en proposant un guide d'onde permettant de minimiser le nombre de modes qui guident les radiations jusqu'à la sortie dudit guide d'onde.

À cet effet, l'invention concerne un guide d'onde non linéaire multimode configuré pour générer une radiation de sortie sensiblement monomode à un mode d'ordre souhaité à partir d'une radiation d'entrée sensiblement monomode dans le domaine spatial et dans le domaine temporel, la radiation d'entrée étant couplée à une radiation de pompe.

Selon l'invention, le guide d'onde présente :

- un profil d'indice selon une section transversale du guide d'onde comprenant au moins un maximum, le ou les maxima du profil d'indice correspondant respectivement à au moins un maximum d'intensité de la radiation de sortie au mode d'ordre souhaité ;
- au moins un ion dopant configuré pour absorber la radiation de pompe, le ou les ions dopants présentant un profil de concentration d'ions dopants selon la section transversale du guide d'onde comprenant au moins un maximum.

Ainsi, grâce au guide d'onde, un réseau d'indice périodique peut être produit par auto-imagerie et par effet Kerr, ce qui permet un échange d'énergie entre les modes afin que l'énergie de tous les modes soit transférée vers le mode souhaité.

De plus, le guide d'onde présente un cœur cylindrique et une gaine périphérique recouvrant le cœur cylindrique.

De façon non limitative, le profil d'indice présente une forme de cloche.

Avantageusement, le profil d'indice présente une dissymétrie par rapport à un axe central du guide d'onde.

Par exemple, le guide d'onde est enroulé afin d'induire la dissymétrie du profil d'indice.

Selon une particularité, le profil d'indice selon la section transversale répond à la condition suivante :

$$(n_1^2 - n_2^2)\left(\frac{R\pi}{\lambda_0}\right)^2 \leq 100,$$

dans laquelle :

$R$ correspond au rayon du cœur cylindrique,
$n_1$ correspond à l'indice maximal du cœur cylindrique,
$n_2$ correspond à l'indice de la gaine périphérique,
$\lambda_0$ correspond à la longueur d'onde de la radiation d'entrée.

Selon une autre particularité, le guide d'onde forme une fibre optique effilée adiabatique.

De façon non limitative, le profil de concentration d'ions dopants selon la section transversale présente une forme de cloche.

Avantageusement, la concentration d'ions dopants selon la section transversale présente une dissymétrie par rapport à l'axe central du guide d'onde.

L'invention concerne également un système amplificateur.

Selon l'invention, le système comprend :

- au moins un guide d'onde tel que décrit ci-dessus,
- une source de radiation configurée pour générer une radiation d'entrée sensiblement monomode dans le domaine spatial et dans le domaine temporel ;
- au moins une source de radiation de pompe configurée pour générer une radiation de pompe apte à être absorbée par le ou les ions dopants,

- un dispositif de couplage configuré pour coupler la radiation d'entrée générée par la source de radiation et la radiation de pompe avant de se propager dans le guide d'onde.

Selon une particularité, la radiation d'entrée générée par la source de radiation est également une radiation à modes longitudinaux bloqués en phase.

BRÈVE DESCRIPTION DES FIGURES

L'invention, avec ses caractéristiques et avantages, ressortira plus clairement à la lecture de la description faite en référence aux dessins annexés dans lesquels :

- la figure 1 représente une vue en coupe d'un mode de réalisation du système amplificateur comprenant le guide d'onde,

- la figure 2 représente un exemple de profil d'indice du guide d'onde,

- la figure 3 représente les images périodiques d'un réseau périodique produit par auto-imagerie,

- la figure 4 représente un réseau d'indice produit à partir du réseau périodique de la figure 3 grâce à l'effet Kerr.

DESCRIPTION DÉTAILLÉE

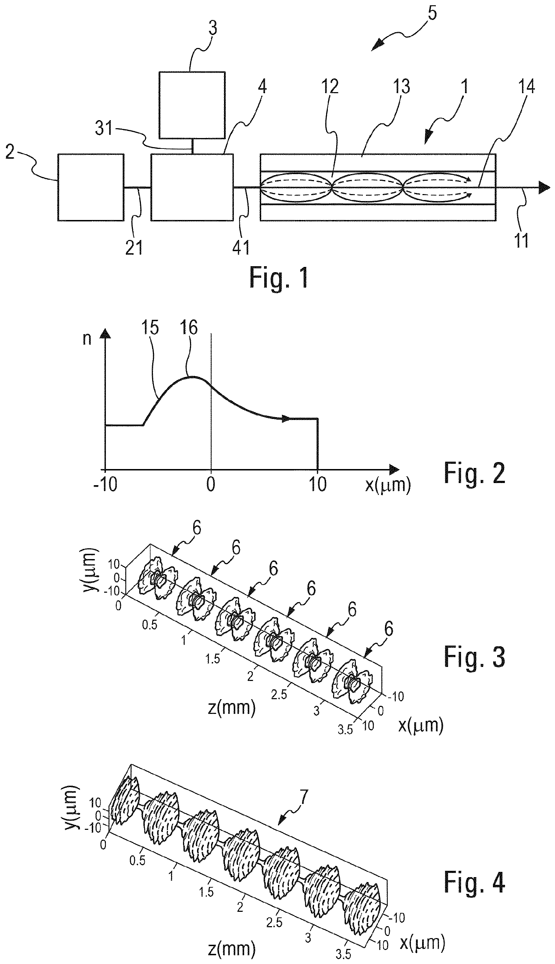

La figure 1 représente un mode de réalisation du guide d'onde 1. Ledit guide d'onde 1 est configuré pour générer une radiation de sortie 11 sensiblement monomode à un mode d'ordre souhaité à partir d'une radiation d'entrée 21 sensiblement monomode dans le domaine spatial et dans le domaine temporel. La radiation d'entrée 21 est couplée à une radiation de pompe 31.

Une radiation sensiblement monomode correspond à une radiation présentant un nombre réduit de modes longitudinaux et spatiaux. Par exemple, une radiation sensiblement monomode présente environ un à cinq modes longitudinaux et spatiaux.

Selon sa section transversale, le guide d'onde 1 présente un profil d'indice (de réfraction) 15 comprenant au moins un maximum (d'indice) 16 (figure 2). Le ou les maxima 16 du profil d'indice 15 correspondent respectivement à au moins un maximum d'intensité de la radiation de sortie 11 au mode d'ordre souhaité.

Le guide d'onde 1 présente également au moins un ion dopant configuré pour absorber la radiation de pompe 31. Le ou les ions dopants présentent un profil de concentration d'ions dopants selon la section transversale du guide d'onde 1 comprenant au moins un maximum (de concentration d'ions dopants).

De façon non limitative, le ou les ions dopants peuvent correspondre à un ion Ytterbium ou un néodyme (Erbium, Thulium, etc.).

Le guide d'onde 1 multimode ainsi configuré autorise un transfert de puissance des modes se propageant dans le guide d'onde 1 vers un mode d'ordre souhaité. Par exemple, il autorise un transfert de puissance des modes d'ordres élevés se propageant dans le guide d'onde 1 vers un seul mode d'ordre bas, en particulier vers le mode fondamental.

Une propagation de la radiation d'entrée 21 couplée à la radiation de pompe 31 dans le guide d'onde 1 produit un réseau d'indice 7 périodique ou quasi périodique pour la longueur d'onde de la radiation d'entrée 21 et pour la longueur d'onde de la radiation de pompe 31. Le réseau d'indice 7 périodique est issu de l'auto-imagerie (ou effet « Talbot ») et de l'effet Kerr.

L'auto-imagerie permet d'obtenir périodiquement une image 6 de la radiation incidente 41 en entrée du guide d'onde 1 au bout d'une longueur spécifique du guide d'onde 1. La longueur spécifique correspond à une longueur pour laquelle tous les modes en entrée du guide d'onde 1 se retrouvent avec leur même état de phase relatif. La figure 3 représente les endroits dans le guide d'onde 1 où les modes en entrée du guide d'onde 1 se retrouvent avec leur même état de phase relatif. Ainsi, une image 6 de la radiation incidente 41 se reproduit périodiquement dans le guide d'onde dans la direction de propagation de radiation. L'auto-imagerie permet alors de produire un réseau périodique ou apériodique. Le réseau est périodique ou apériodique selon que le profil du guide d'onde 1 est stable ou évolutif en diamètre.

L'effet Kerr permet de moduler l'indice du guide d'onde 1 par une radiation se propageant dans ledit guide d'onde 1. L'effet Kerr transforme alors le réseau périodique ou apériodique, produit par l'auto-imagerie, en réseau d'indice 7 périodique ou apériodique. La figure 4 représente le réseau d'indice 7 périodique ou apériodique obtenu à partir du réseau périodique ou apériodique de la figure 3.

L'effet Raman peut également être à l'origine de la modification du réseau d'indice 7 à cause de son gain préférentiellement fort au niveau des nœuds du réseau.

Le réseau d'indice 7 périodique ou apériodique permet de favoriser les mélanges à quatre ondes et donc de rompre l'orthogonalité entre les modes et de permettre un échange d'énergie entre eux. Pour une puissance de radiation d'entrée 21 élevée, l'énergie précédemment répartie sur un ensemble de modes se retrouve transférée vers un mode d'ordre souhaité, en particulier vers le mode fondamental, ce qui correspond à un nettoyage spatial de la radiation de sortie 11

Selon un mode de réalisation, le guide d'onde 1 présente un cœur cylindrique 12 et une gaine périphérique 13 recouvrant le cœur cylindrique 12.

Selon d'autres modes de réalisation, le guide d'onde peut prendre d'autres formes, telles qu'une forme dont la section transversale est carrée, ovale, etc.

Avantageusement, le cœur cylindrique 12 est cristallin.

De façon non limitative, le cœur cylindrique peut être fabriqué à partir d'un grenat d'yttrium-aluminium dopé au néodyme ou à partir d'un cristal dopé à l'Ytterbium.

De façon non limitative, le profil d'indice 15 présente une forme de cloche. La forme de cloche peut correspondre à une forme triangulaire, une forme gaussienne, une forme super-gaussienne, une forme lorentzienne, une forme pseudo-parabolique, etc.

Par ailleurs, le profil d'indice 15 selon la section transversale présente une dissymétrie par rapport à l'axe central 14 du guide d'onde 1, comme représenté sur la figure 2. L'axe central 14 correspond à un axe longitudinal du guide d'onde 1 situé au centre du guide d'onde 1.

La dissymétrie du profil d'indice 15 peut être induite par un enroulement du guide d'onde 1.

De préférence, le profil d'indice 15 selon la section transversale du guide d'onde 1 répond à la condition suivante :

$$(n_1^2 - n_2^2)\left(\frac{R\pi}{\lambda_0}\right)^2 \leq 100$$

dans laquelle :

R correspond au rayon du cœur cylindrique,
$n_1$ correspond à l'indice maximal du cœur,
$n_2$ correspond à l'indice de la gaine périphérique,
$\lambda_0$ correspond à la longueur d'onde de la radiation d'entrée.

Cette condition permet d'obtenir un guide d'onde 1 possédant un nombre de modes sensiblement inférieur à cent modes.

Le guide d'onde 1 peut former une fibre optique effilée adiabatique. Cette forme de guide d'onde 1 permet une évolution (telle qu'une amélioration) de l'auto-imagerie et de l'effet Kerr.

Par ailleurs, le profil de concentration d'ions dopants selon la section transversale présente une forme de cloche. De la même manière que pour le profil d'indice 15, la forme de cloche peut correspondre à une forme triangulaire, une forme gaussienne, une forme super-gaussienne, une forme lorentzienne, une forme pseudo-parabolique, etc.

De même, la concentration d'ions dopants selon la section transversale peut présenter une dissymétrie par rapport à l'axe central 14 du guide d'onde 1.

L'invention concerne également un système amplificateur 5.

Le système amplificateur 5 comprend au moins un guide d'onde 1.

Le système amplificateur 5 comprend également au moins une source de radiation 2 configurée pour générer la radiation d'entrée 21 sensiblement monomode dans le domaine spatial et dans le domaine temporel.

La source de radiation 2 peut être une source à impulsions non symétriques temporellement.

Par exemple, la source de radiation 2 peut comprendre un laser Nd :YAG produisant une radiation de sortie 21 à une longueur d'onde de 1064 nm et à une impulsion de 60 ps.

La radiation d'entrée 21 générée par la source de radiation 2 peut être une radiation à modes longitudinaux bloqués en phase.

Le système amplificateur 5 comprend en outre au moins une source de radiation de pompe 3 configurée pour générer la radiation de pompe 31 apte à être absorbée par le ou les ions dopants. La source de radiation de pompe 3 peut correspondre à une diode de puissance. La source de radiation de pompe 3 peut fonctionner en régime pulsé ou continu. Elle peut être fibrée ou non fibrée. Elle peut être multimode ou monomode spatialement.

Le système amplificateur 5 comprend aussi un dispositif de couplage 4 configuré pour coupler la radiation d'entrée 21 générée par la source de radiation 2 et la radiation de pompe 31 avant de se propager dans le guide d'onde 1.

Le dispositif de couplage 4 peut comprendre un isolateur, une lentille de couplage, un modulateur spatial de lumière pour contrôler en phase et en amplitude l'onde (radiation) qui se propage dans le guide d'onde 1 (fibre), une lame d'onde (λ/2 et/ou λ/4) pour tourner ou décomposer la polarisation. La lame d'onde, la position de la lentille de couplage et/ou le modulateur spatial de lumière permettent de choisir le mode d'ordre souhaité.

Le dispositif de couplage 4 peut exciter les modes avec une radiation spatialement divergente.

Avantageusement, le dispositif de couplage 4 peut être fibré ou massif. Il peut comprendre un filtre spectral et/ou un filtre spatial pour améliorer la radiation de pompe 31. Il peut être à fibres multimodes paraboliques ou à fibres monomodes.

Le système 5 peut être utilisé en source laser en rajoutant deux miroirs partiellement réfléchissant disposés respectivement à une extrémité du guide d'onde 1 (non représenté).

Le système peut comprendre plusieurs guides d'onde 1 couplés ou non.

Le nettoyage spatial de la radiation de sortie 11 permet de garder une cohérence entre plusieurs amplification parallèles réalisées dans deux guides d'onde 1 différents.

**Revendications**

1. Guide d'onde (1) multimode non linéaire configuré pour générer une radiation de sortie (11) sensiblement monomode à un mode d'ordre souhaité à partir d'une radiation d'entrée (21) sensiblement monomode dans le domaine spatial et dans le domaine temporel, la radiation d'entrée (21) étant couplée à une radiation de pompe (31),
**caractérisé en ce qu'**il présente :

- un profil d'indice (15) selon une section transversale du guide d'onde (1) comprenant au moins un maximum (16), le ou les maxima (16) du profil d'indice (15) correspondant respectivement à au moins un maximum d'intensité de la radiation de sortie (11) au mode d'ordre souhaité ;
- au moins un ion dopant configuré pour absorber la radiation de pompe (31), le ou les ions dopants présentant un profil de concentration d'ions dopants selon la section transversale du guide d'onde (1) comprenant au moins un maximum.

2. Guide d'onde selon la revendication 1, **caractérisé en ce qu'**il (1) présente un cœur cylindrique (12) et une gaine périphérique (13) recouvrant le cœur cylindrique (12).

3. Guide d'onde selon l'une quelconque des revendications 1 et 2, **caractérisé en ce que** le profil d'indice (15) présente une forme de cloche.

4. Guide d'onde selon l'une quelconque des revendications 1 à 3, **caractérisé en ce que** le profil d'indice (15) présente une dissymétrie par rapport à un axe central (14) du guide d'onde (1).

5. Guide d'onde selon l'une quelconque des revendications 1 à 4, **caractérisé en ce qu'**il est enroulé afin d'induire la dissymétrie du profil d'indice (15).

6. Guide d'onde selon l'une quelconque des revendications 1 à 5, **caractérisé en ce que** le profil d'indice (15) selon la section transversale répond à la condition suivante :

$$(n_1^2 - n_2^2)\left(\frac{R\pi}{\lambda_0}\right)^2 \leq 100,$$

dans laquelle :

R correspond au rayon du cœur cylindrique (12),
$n_1$ correspond à l'indice maximal du cœur cylindrique (12),
$n_2$ correspond à l'indice de la gaine périphérique (13),
$\lambda_0$ correspond à la longueur d'onde de la radiation d'entrée (21).

7. Guide d'onde selon l'une quelconque des revendications 1 à 6, **caractérisé en ce qu'**il forme une fibre optique effilée adiabatique.

8. Guide d'onde selon l'une quelconque des revendications 1 à 7, **caractérisé en ce que** le profil de concentration d'ions dopants selon la section transversale présente une forme de cloche.

9. Guide d'onde selon l'une quelconque des revendications 1 à 8, **caractérisé en ce que** la concentration d'ions dopants selon la section transversale présente une dissymétrie par rapport à l'axe central (14) du guide d'onde (1).

10. Système amplificateur, **caractérisé en ce qu'**il comprend :

- au moins un guide d'onde (1) selon l'une quelconque des revendications 1 à 9,
- une source de radiation (2) configurée pour générer une radiation d'entrée (21) sensiblement monomode dans le domaine spatial et dans le domaine temporel ;
- au moins une source de radiation de pompe (3) configurée pour générer une radiation de pompe (31) apte à être absorbée par le ou les ions dopants,
- un dispositif de couplage (4) configuré pour coupler la radiation d'entrée (21) générée par la source de radiation (2) et la radiation de pompe (31) avant de se propager dans le guide d'onde (1).

11. Système selon la revendication 10, **caractérisé en ce que** la radiation d'entrée (21) générée par la source de radiation (2) est également une radiation à modes longitudinaux bloqués en phase.

Fig. 1

Fig. 2

Fig. 3

Fig. 4

Europäisches
Patentamt

European
Patent Office

Office européen
des brevets

**RAPPORT DE RECHERCHE EUROPEENNE**

Numéro de la demande

EP 21 15 8983

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X<br>A | EP 1 811 616 A2 (FURUKAWA ELECTRIC NORTH AM INC [US]) 25 juillet 2007 (2007-07-25)<br>* abrégé; figures 1-6 *<br>* alinéas [0001], [0017], [0019]; revendications 1,12 *<br>----- | 1,2,4,9,10<br><br>3,5-8,11 | INV.<br>G02F1/39<br>G02B6/14<br>H01S3/067 |
| X | CHRISTOPHE A. CODEMARD ET AL: "Tandem Pumping of Large-Core Double-Clad Ytterbium-Doped Fiber for Control of Excess Gain",<br>LASERS, SOURCES AND RELATED PHOTONIC DEVICES,<br>1 janvier 2010 (2010-01-01), page AWA3,<br>XP055450689,<br>Washington, D.C.<br>DOI: 10.1364/ASSP.2010.AWA3<br>ISBN: 978-1-55752-880-3<br>* le document en entier *<br>----- | 1,3,10 | |
| A | US 2012/219026 A1 (SARACCO MATTHIEU [US] ET AL) 30 août 2012 (2012-08-30)<br>* abrégé; revendication 1; figures 4,10-12,18-20,24 *<br>* alinéas [0002], [0090] - [0096] *<br>----- | 1-11 | DOMAINES TECHNIQUES RECHERCHES (IPC)<br><br>G02F<br>G02B<br>H01S |
| A | GUÉNARD ROMAIN ET AL: "Spatial beam self-cleaning in multimode lanthanum aluminum silicate glass fiber",<br>OPTICAL FIBER TECHNOLOGY, ELSEVIER, AMSTERDAM, NL,<br>vol. 53, 17 septembre 2019 (2019-09-17),<br>XP085916915,<br>ISSN: 1068-5200, DOI:<br>10.1016/J.YOFTE.2019.102014<br>[extrait le 2019-09-17]<br>* le document en entier *<br>----- | 1-11 | |

Le présent rapport a été établi pour toutes les revendications

| Lieu de la recherche | Date d'achèvement de la recherche | Examinateur |
|---|---|---|
| La Haye | 12 mai 2021 | Beugin, Anne |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 21 15 8983

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-05-2021

| Document brevet cité au rapport de recherche | Date de publication | Membre(s) de la famille de brevet(s) | Date de publication |
|---|---|---|---|
| EP 1811616 A2 | 25-07-2007 | CN 1982929 A<br>EP 1811616 A2<br>GT 200800102 A<br>JP 4959314 B2<br>JP 2007165906 A | 20-06-2007<br>25-07-2007<br>18-03-2009<br>20-06-2012<br>28-06-2007 |
| US 2012219026 A1 | 30-08-2012 | AUCUN | |

EPO FORM P0460